# EUROPÄISCHE PATENTSCHRIFT

(11) **EP 0 561 801 B1**
(45) Veröffentlichungstag und Bekanntmachung des Hinweises auf die Patenterteilung: **10.08.1994**
(21) Anmeldenummer: 91919146.0
(22) Anmeldetag: 08.11.1991
(51) Int. Cl.: B62D 29/00, B62D 25/04, B62D 27/02

(54) **SCHWEISSVERBINDUNG ZWISCHEN EINEM ALUMINIUMTRÄGER UND EINEM DAMIT VERBUNDENEN BAUTEIL, INSBESONDERE ZWISCHEN ZWEI, ETWA SENKRECHT ZUEINANDER STEHENDEN ALUMINIUM-STRANGPROFILEN AN EINEM FAHRZEUG**
WELDED JOINT BETWEEN AN ALUMINIUM BEARER AND A COMPONENT CONNECTED THERETO, ESPECIALLY BETWEEN TWO MUTUALLY SUBSTANTIALLY PERPENDICULAR EXTRUDED ALUMINIUM SECTIONS ON A VEHICLE
ASSEMBLAGE PAR SOUDAGE ENTRE UNE POUTRELLE EN ALUMINIUM ET UN ELEMENT DE CONSTRUCTION RELIE A CELLE-CI, NOTAMMENT ENTRE DEUX PROFILES EXTRUDES EN ALUMINIUM SENSIBLEMENT PERPENDICULAIRES ENTRE EUX, DANS UN VEHICULE AUTOMOBILE

(30) Priorität: 20.12.1990 DE 4040946
(43) Veröffentlichungstag der Anmeldung: 29.09.1993
(73) Patentinhaber: AUDI AG, 85002 Ingolstadt (DE)
(72) Erfinder: ENNING, Norbert, D-8071 Denkendorf (DE); TIMM, Heinrich, D-8070 Ingolstadt (DE)
(74) Vertreter: Engelhardt, Harald
(86) Internationale Anmeldenummer: EP9102116
(87) Internationale Veröffentlichungsnummer: WO9211169

(56) Entgegenhaltungen:
- DE-A- 1 430 673
- DE-A- 3 700 131
- DE-C- 452 318
- PATENT ABSTRACTS OF JAPAN, Band 13, Nr. 512 (M-893), 16. November 1989

## Beschreibung

Die Erfindung betrifft eine Schweißverbindung zwischen einem Schweller und einem Pfosten B eines Fahrzeugs nach dem Oberbegriff des Anspruchs 1.

Es ist bekannt (EP-PS 0 146 716), die Tragstruktur einer Fahrzeugkarosserie aus Aluminium-Strangpreßprofilen aufzubauen, die über Knotenelemente als Gußteile miteinander verbunden sind. Die Aluminium-Strangprofile werden dazu, je nach Gegebenheiten, in die Gußknotenelemente eingesteckt, an speziell geformten Anlageflächen aufgelegt oder von Schalen umfaßt und verschweißt. Je nach Gegebenheiten kann es auch zweckmäßig und preisgünstig sein, zwei, insbesondere etwa senkrecht aneinandergrenzende Aluminium-Strangprofile direkt ohne Gußknotenelemente zu verbinden.

Es ist allgemein bekannt, daß bei der Verwendung von aushärtbaren Aluminiumlegierungen eine Schmelzschweißung in der sog. Wärmeeinflußzone einen starken Festigkeitsabfall im angeschweißten Aluminiumbauteil erzeugt. Besonders eine an einem Aluminium-Strangprofil in Querrichtung umlaufende Schweißverbindung ist somit kritisch, da dadurch eine Schwächung in einer durchgehenden Querebene erfolgt. Bei stark belasteten Verbindungsstellen, insbesondere bei extrem hohen Belastungen durch einen Aufprall bei einem Fahrzeugunfall, können solche Verbindungen abreißen.

Es ist aus der o. g. Schrift (EP-PS 0 146 716) bekannt, den Pfosten B direkt mit dem Schweller des Fahrzeugs, beides Aluminium-Strangprofile, zu verbinden. Eine in der üblichen Verbindungsweise angebrachte umlaufende Schweißnaht ist hier wegen der reduzierten Festigkeit ungünstig, da bei einem Seitenaufprall diese Verbindung besonders gefährdet ist und somit die Gefahr besteht, daß der Pfosten B an der Verbindung zum Schweller abreißt. Besonders der an der Innenseite des Fahrzeugs liegende Bereich ist hier extrem hoch belastet. Zur Vermeidung einer umlaufenden Schweißnaht und damit einer umlaufenden Schwächung kann jedoch hier aus Steifigkeits- und Zugfestigkeitsgründen eine Schweißnaht im Innenbereich des Fahrzeugs nicht entfallen.

Weiter ist eine Schweißverbindung zwischen zwei in einem Winkel zusammenstoßenden Aluminium-Strangprofilen bekannt (DE 21 28 281 B2), bei der in einer Ecke ein etwa dreiecksförmiges Seitenteil eingesetzt ist, das an den zwei anliegenden Längsrändern mit den Aluminium-Strangprofilen von der Außenseite her stumpf verschweißt ist. Weiter ist die äußere Anlagekante des stumpf angesetzten Aluminium-Strangprofils ebenfalls stumpf verschweißt. Eine solche Schweißverbindung ist zwar nicht in Querrichtung umlaufend, jedoch für die extrem hohen Belastungen bei einem Seitenaufprall an der Verbindung zwischen Schweller und Pfosten B nur bedingt geeignet.

Aufgabe der Erfindung ist es, eine Schweißverbindung zwischen einem Schweller und einem Pfosten B eines Fahrzeugs zu schaffen, die hohen Belastungen standhält, wobei der Schweller und der Pfosten B aus T-förmig zueinander stehenden Aluminium-Strangprofilen als Hohlprofile bestehen.

Diese Aufgabe wird mit den Merkmalen des Anspruchs 1 gelöst.

Gemäß Anspruch 1 ist der Pfosten B formschlüssig über eine Ausnehmung in die Innenseite des Schwellers geführt. Ein plattenförmiges Verbindungsteil ist mit einer Kante in Längsrichtung des Schwellers aufgesetzt und dort mit diesem in einer Längsschweißung, bezogen auf den Schwellerverlauf, mit einer ersten Schweißnaht verbunden. Das plattenförmige Verbindungsteil liegt von der Fahrzeuginnenseite her am Pfosten B an und ist dort ebenfalls in wenigstens einer Längsverschweißung, bezogen auf den Verlauf des Pfostens B, mit wenigstens einer zweiten Schweißnaht verbunden. Der Pfosten B ist gegenüber dem plattenförmigen Verbindungsteil bzw. gegenüber dessen Anlagefläche am Pfosten B an der Fahrzeugaußenseite mit einer Querverschweißung, bezogen auf den Verlauf des Pfostens B, als dritte Schweißnaht mit dem Schweller an dessen Ausnehmung verbunden.

Durch die Kombination einer formschlüssigen Einsteckverbindung mit der beanspruchten Anordnung und Lage der Schweißnähte wird eine besonders große und erhöhte Steifigkeit und Festigkeit an der besonders kritischen Verbindung zwischen Schweller und Pfosten B erreicht, wobei insbesondere keine umlaufende Schwächung der Tragstruktur erfolgt. Durch das am Pfosten B von der Fahrzeuginnenseite her anliegende, plattenförmige Verbindungsteil wird in Verbindung mit den Schweißnähten ein stabiler Teileverbund geschaffen, der besonders einem in den Fahrgastraum eindringenden Gegenstand einen hohen Widerstand entgegensetzt und damit zur Stabilität der Fahrgastzelle im besonders gefährdeten Seitenbereich einen wesentlichen Beitrag leistet. Diese hohe Stabilität und Festigkeit wird zudem mit einfachen Mitteln und Maßnahmen bei einer kostengünstigen Montage erreicht.

Eine zusätzliche Festigkeitserhöhung wird gemäß Anspruch 2 dadurch erzielt, daß der Pfosten B an der Innenseite des Schwellers formschlüssig mit seiner Endseite anliegt und dort über eine ggfs. auch umlaufende, vierte Schweißnaht mit dem Schweller verbunden ist.

Eine weitere Stabilitätsverbesserung wird gemäß Anspruch 3 dann erhalten, wenn eine Schweißnaht im plattenförmigen Verbindungsteil durch die Schweißung in einem Längsschlitz integriert und ggfs. zusätzlich zu einer Randverschweißung angebracht ist.

Anhand einer Zeichnung wird ein Ausführungsbeispiel der Erfindung mit weiteren Einzelheiten, Merkmalen und Vorteilen näher erläutert.

Es zeigen
- Fig. 1: eine perspektivische Ansicht einer Verbindung zwischen zwei Aluminiumträgern mit umlaufender Querschweißung nach dem Stand der Technik, und
- Fig. 2: eine perspektivische Ansicht einer erfindungsgemäßen Schweißverbindung.

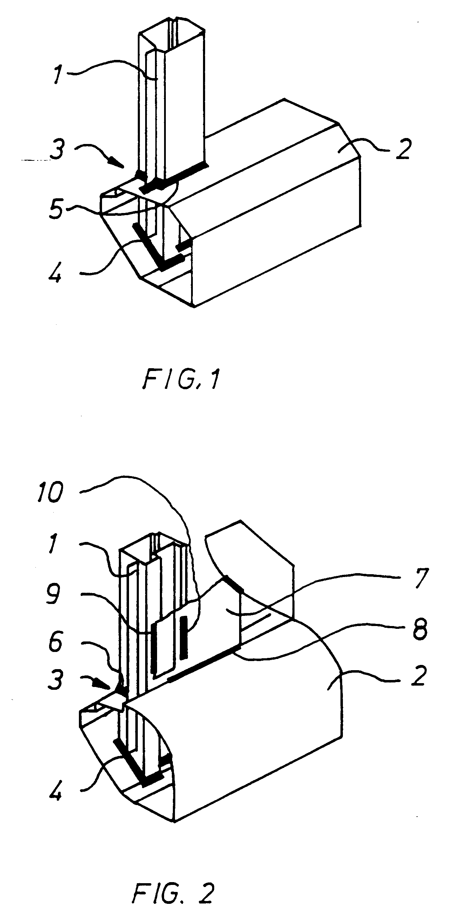

In Fig. 1 ist ein Teil eines Pfostens B 1 eines Fahrzeugs als Aluminium-Strangprofil dargestellt. Weiter ist ein dazu quer und horizontal verlaufender Teil eines Schwellers 2 eines Fahrzeugs als Aluminium-Strangprofil dargestellt.

Eine übliche Verbindung zwischen dem Pfosten B 1 und dem Schweller 2 ist dadurch hergestellt, daß der Pfosten B 1 durch eine Ausnehmung 3 im größeren Profil des Schwellers 2 formschlüssig eingesteckt ist. Der Pfosten B 1 ist an seiner Endseite über eine Schweißnaht 4 mit der Innenseite des Schwellers 2 verbunden. Eine weitere Verbindung ist über eine an der Ausnehmung 3 und quer zum Profil des Pfosten B 1 liegende, umlaufende Schweißnaht 5 als Querschweißung durchgeführt.

Diese umlaufende Querschweißung führt zu einer umlaufenden Schwachstelle wegen eines starken Festigkeitsabfalls durch den Schweißvorgang.

In Fig. 2 ist die erfindungsgemäße Schweißverbindung dargestellt, wobei auch hier ein Pfosten B 1 eines Fahrzeugs mit einem Schweller 2 eines Fahrzeugs verbunden ist. Auch hier ist der Pfosten B 1 formschlüssig in eine Ausnehmung 3 am Schweller 2 eingesetzt, wobei sich die Profile durchdringen und der Pfosten B 1 an seiner Endseite über eine Schweißnaht 4 verbunden ist.

Im Bereich der Ausnehmung 3 liegt jedoch keine umlaufende Schweißnaht als Querschweißung. Es ist lediglich der Pfosten B 1 von der Fahrzeugaußenseite her einseitig über eine Schweißnaht 6 im Bereich der Ausnehmung 3 mit dem Schweller 2 verbunden. Die Schweißnaht 6 kann gegebenenfalls, wie dargestellt, noch etwas um die Seitenbereiche herumgezogen sein.

Ein plattenförmiges Verbindungsteil 7 ist mit einer Kante in Längsrichtung des Schwellers 2 aufgesetzt und dort mit einer, bezogen auf den Schwellerverlauf, längsverlaufenden Schweißnaht 8 verbunden. Das Verbindungsteil 7 liegt von der Fahrzeuginnenseite her am Pfosten B 1 an. Dabei verläuft eine Kante als Anlagekante in Längsrichtung des Pfosten B 1. Dort ist eine Schweißnaht 9 angebracht. Eine weitere Schweißnaht 10 ist durch einen Längsschlitz im Verbindungsteil 7 parallel zur Schweißnaht 9 angebracht. Die Schweißnähte 6, 8, 9 und 10 haben jeweils einen so großen Abstand voneinander, daß sich deren kritische Wärmeeinflußzonen beim Schweißvorgang und damit ein merklicher Festigkeitsabfall weder berühren noch überlappen.

Mit der erfindungsgemäßen Schweißverbindung wird somit bei einfachem und kostengünstigen Aufbau eine stark belastbare Schweißverbindung zwischen einem Aluminiumträger und einem damit verbundenen Bauteil erreicht.

## Patentansprüche

1. Schweißverbindung zwischen einem Schweller und einem Pfosten B eines Fahrzeugs, wobei der Schweller und der Pfosten B aus T-förmig zueinander stehenden Aluminium-Strang-Profilen als Hohlprofile bestehen,
dadurch gekennzeichnet,
daß der Pfosten B (1) formschlüssig über eine Ausnehmung in die Innenseite des Schwellers (2) geführt ist,
daß ein plattenförmiges Verbindungsteil (7) mit einer Kante in Längsrichtung des Schwellers (2) aufgesetzt und dort mit diesem in einer Längsschweißung, bezogen auf den Schwellerverlauf, mit einer ersten Schweißnaht (8) verbunden ist,
daß das plattenförmige Verbindungsteil (7) von der Fahrzeuginnenseite her am Pfosten B (1) anliegt und dort ebenfalls in wenigstens einer Längsschweißung, bezogen auf den Verlauf des Pfostens B (1), mit wenigstens einer zweiten Schweißnaht (9, 10) verbunden ist und
daß der Pfosten B (1) gegenüber dem plattenförmigen Verbindungsteil (7) bzw. gegenüber dessen Anlagefläche am Pfosten B (1) an der Fahrzeugaunenseite mit einer Querschweißung, bezogen auf den Verlauf des Pfostens B (1), als dritte Schweißnaht (6) mit dem Schweller (2) an dessen Ausnehmung verbunden ist.

2. Schweißverbindung nach Anspruch 1, dadurch gekennzeichnet, daß der Pfosten B (1) an der Innenseite des Schwellers (2) formschlüssig mit seiner Endseite anliegt und dort über eine ggfs. umlaufende, vierte Schweißnaht (4) mit dem Schweller (2) verbunden ist.

3. Schweißverbindung nach Anspruch 1 oder 2, dadurch gekennzeichnet, daß im plattenförmigen Verbindungsteil (7) wenigstens ein Längsschlitz angebracht und dort wenigstens eine zweite Schweißnaht (10) im Längsschlitz angebracht ist.

## Claims

1. Welded connection between a sill beam and a B-post of a vehicle, where the sill beam and the B-post consist of extruded hollow aluminium profiles set against one another in the shape of a T,
characterised in that
the B-post (1) passes in a form-fit via a recess into the inside face of the sill beam (2),
a plate-shaped connecting part (7) is attached by one edge in the longitudinal direction of the sill beam, where it is joined to the latter in a longitudinal weld, based on the course of the sill beam, by a first weld (8),
the plate-shaped connecting part (7) bears from the inside of the vehicle against the B-post (1), where it is likewise joined in at least one longitudinal weld, based on the course of the B-post (1), by at least a second weld (9, 10), and
on the vehicle exterior the B-post (1) is joined with respect to the plate-shaped connecting part (7), or rather with respect to the contact surface thereof on the B-post (1), by a transverse weld, based on the course of the B-post (1), as a third weld (6) to the sill beam (2) at the recess therein.

2. Welded connection according to claim 1, characterised in that the B-post (1) bears positively with its end face against the inside face of the sill beam (2), where it is joined to the sill beam (2) by a fourth weld (4) running all the way around if appropriate.

3. Welded connection according to claim 1 or 2, characterised in that at least one slot is incorporated in the plate-shaped connecting part (7), and there at least a second weld (10) is made in the slot (10).

## Revendications

1. Assemblage soudé entre un longeron et un pilier B d'un véhicule automobile, le longeron et le pilier B étant constitués par des profilés filés d'aluminium, sous forme de profilés creux, disposés en T l'un par rapport à l'autre,
caractérisé en ce que
le pilier B (1) est introduit par un évidement à l'intérieur du longeron (2) et y est maintenu par emboîtement,
une pièce de jonction (7) en forme de plaque est posée sur chant dans la direction longitudinale du longeron (2) et y est fixée à celui-ci par un premier cordon de soudure (8) en une opération de soudage longitudinal par rapport à l'étendue du longeron,
la pièce de jonction (7) en forme de plaque est appliquée contre le pilier B (1) du côté intérieur du véhicule et elle y est également fixée par au moins un deuxième cordon de soudure (9, 10), en au moins une opération de soudage longitudinal par rapport à l'étendue du pilier B (1), et
le pilier B (1) est fixé au longeron (2), au niveau de l'évidement de celui-ci, en face de la pièce de jonction (7) en forme de plaque ou en face de la surface d'application de celle-ci contre le pilier B (1), du côté extérieur du véhicule, par une soudure transversale par rapport à l'étendue du pilier B (1), constituant un troisième cordon de soudure (6).

2. Assemblage soudé selon la revendication 1, caractérisé en ce que le pilier B (1) s'appuie par son extrémité, avec adaptation des formes, contre la surface interne du longeron (2) et y est fixé au longeron (2) par un quatrième cordon de soudure (4) qui s'étend éventuellement tout autour.

3. Assemblage soudé selon la revendication 1 ou 2, caractérisé en ce qu'il est formé, dans la pièce de jonction (7) en forme de plaque, au moins une fente longitudinale et en ce qu'au moins un deuxième cordon de soudure (10) est formé dans cette fente longitudinale.
